# FASCICULE DE BREVET EUROPEEN

(11) **EP 0 511 071 B1**
(45) Date de publication et mention de la délivrance du brevet: **29.01.1997**
(21) Numéro de dépôt: 92401105.9
(22) Date de dépôt: 17.04.1992
(51) Int. Cl.: C10G 11/18

(54) **Procédé et dispositif d'échange thermique de particules solides pour régénération en craquage catalytique**
Verfahren und Vorrichtung für Wärmeaustausch von festen Teilchen für Regenerierung in katalytischem Cracken
Process and apparatus for heat exchange of solid particles for the regeneration in catalytic cracking

(30) Priorité: 26.04.1991 FR 9105282
(43) Date de publication de la demande: 28.10.1992
(73) Titulaire: INSTITUT FRANCAIS DU PETROLE, 92502 Rueil-Malmaison (FR)
(72) Inventeur: Hoffmann, Frédéric, F-75010 Paris (FR); Bonifay, Régis, F-92600 Asnieres (FR)

(56) Documents cités:
- US-A- 4 434 245
- US-A- 4 614 726
- US-A- 4 923 834

## Description

L'invention concerne un procédé de régénération d'un catalyseur usé avec échange thermique en lit fluidisé et un dispositif pour la mise en oeuvre de ce procédé. Plus particulièrement, le procédé peut s'appliquer à la régénération de catalyseurs particulièrement chargés en résidus hydrocarbonés et en coke après réaction avec une charge d'hydrocarbures. Elle peut concerner les catalyseurs d'hydrotraitement, d'hydrocraquage ou de craquage catalytique, de réformage ou même toute masse de contact utilisée par exemple dans les procédés de craquage thermique.

A titre d'exemple purement illustratif, on appliquera le procédé à la régénération de catalyseur usé issu d'un procédé de craquage catalytique, en lit fluidisé, de charges lourdes ayant un carbone Conradson élevé, telles qu'un résidu atmosphérique, un résidu sous vide, un résidu désasphalté, ces résidus pouvant être hydrotraités.

Ce procédé s'appliquera tout particulièrement au contrôle de la température.

Les procédés de craquage catalytique convertissent les charges hydrocarbonées en produits plus légers tels que des essences. Initialement, les charges étaient relativement légères, des gazoles par exemple et pour obtenir une efficacité maximale de conversion à partir de catalyseurs zéolithiques très actifs, il était nécessaire de retirer la maximum de coke qui s'était déposé sur ces catalyseurs et qui diminuait son activité, durant une étape de régénération à une température se situant entre 520 et 800°C.

La demande pressante en carburants amène les raffineurs à s'intéresser à des charges de plus en plus lourdes, comportant des hydrocarbures à haut point d'ébullition, par exemple à un point d'ébullition supérieur à 550°C, ayant un carbone Conradson élevé ou une concentration en métaux importante. Du coke et des hydrocabures lourds peuvent alors se déposer sur le catalyseur en quantité importante durant la phase de craquage catalytique et sa régénération par une combustion peut provoquer un dégagement de chaleur important qui peut détériorer l'appareillage et désactiver le catalyseur, notamment lors de longues expositions à des températures supérieures à 800°C. Il devient alors impératif de contrôler la régénération du catalyseur. Ce problème se pose notamment lorsqu'on veut appliquer à une technologie existant depuis longtemps et traitant essentiellement des charges hydrocarbonées conventionnelles, un procédé mettant en jeu des charges beaucoup plus lourdes.

Un des objets de l'invention est donc de proposer un procédé et un dispositif de régénération comportant le contrôle de refroidissement du catalyseur dans une unité de craquage catalytique en vue du traitement de charges lourdes.

Un autre objet de l'invention est de répondre à une plus grande souplesse d'utilisation du dispositif.

L'art antérieur est illustré par les brevets suivants:
- le brevet US 4614724 enseigne un dispositif décrivant un régénérateur dont la température de régénération est contrôlée par un échangeur de chaleur externe à écoulement descendant à travers un faisceau de tubes.
   Le catalyseur refroidi est recyclé vers le régénérateur par une conduite de remontée du catalyseur en l'état fluidisé, dans le lit dense de ce régénérateur. Le catalyseur dans l'échangeur est maintenu en lit dense par un gaz de fluidisation s'écoulant à contre-courant du sens d'écoulement du catalyseur et le gaz de fluidisation est soit entraîné avec celui-ci lorsque le débit est très faible, soit évacué par la ligne d'entrée du catalyseur. Cette circulation à contre-courant du gaz perturbe l'écoulement du catalyseur dans la tubulure d'entrée et dans l'échangeur et l'échange thermique n'est pas maximal.
- Le brevet US 4434245 décrit un régénérateur à deux niveaux, comportant un échangeur externe avec admission latérale du catalyseur chaud en provenance du niveau supérieur qui est une zone de stockage.
   Le catalyseur refroidi est recyclé par une conduite recevant l'air de régénération ainsi que le catalyseur usagé, dans une zone correspondant au niveau inférieur où s'effectue la combustion. Donc, le fonctionnement du régénérateur et de l'échangeur est étroitement lié puisque le retour du catalyseur refroidi dans le régénérateur est fonction du débit de fluidisation de l'air servant à la régénération qu circule dans ladite conduite. Ce brevet enseigne par ailleurs une tubulure au-dessus de l'échangeur qui débouche dans le lit dense de l'échangeur, de sorte que le désengagement du gaz et des fumées ne peut s'effectuer parfaitement compte tenu de la présence du catalyseur dans cette tubulure. Il peut alors se produire un phénomène de circulation de catalyseur avec retour par le haut (backmixing). Le désengagement du gaz s'effectue d'autant plus mal que le faisceau d'échange arrive jusqu'à l'extrémité supérieure de l'échangeur. Le mélange n'est pas forcément homogène et il existe donc une zone supérieure où le catalyseur stagne et où il est mal renouvelé, de sorte que l'échange thermique est diminué.
- Le brevet US 4923834 décrit un procédé à "backmixing" où une tubulure supérieure débouchant dans la conduite d'admission dans l'échangeur du catalyseur qui circule en lit dense, permet le retour du catalyseur de l'échangeur dans la chambre de stockage du régénérateur. Il s'agit donc ici de refroidissement par "backmixing" et non pas d'une solution à un problème d'évacuation d'un échangeur thermique de fumées et d'air de fluidisation permettant de maximiser l'échange thermique.
   La présente invention remédie aux inconvénients mentionnés ci-dessus et permet d'obtenir des résultats sensiblement améliorés.

De manière plus précise l'invention concerne un procédé de régénération en lit fluidisé d'un catalyseur contaminé par du coke déposé sur celui-ci caractérisé par les étapes suivantes :
a/ on procède à une régénération en lit dense dans au moins une zone de régénération contenant ledit lit dense, dans des conditions appropriées, du catalyseur contaminé et du catalyseur au moins en partie refroidi provenant de l'étape f) ci-dessous, en présence d'un gaz de régénération contenant de l'oxygène,
b/ on envoie par une conduite inclinée vers le bas une partie au moins du catalyseur contenu dans la zone de régénération ainsi qu'une partie des fumées dans une zone d'échange thermique externe et de hauteur appropriée, ladite conduite reliant le lit dense de la zone de régénération à la zone d'échange thermique et y débouchant en un point de jonction situé sous le niveau du lit dense de la zone de régénération à une distance de l'extrémité supérieure de la zone d'échange thermique comprise entre le quart et la moitié de sa hauteur totale et disposé de telle façon que l'on détermine de l'extrêmité inférieure de la zone d'échange thermique jusqu'au dessus dudit point de jonction une zone en lit dense de catalyseur s'établissant sensiblement jusqu'au niveau de catalyseur dans la zone de régénération et une zone de désengagement ayant un volume approprié au-dessus dudit lit dense jusqu'à l'extrêmité supérieure de la zone d'échange, la hauteur de la zone d'échange thermique étant telle que le volume disponible pour le désengagement des gaz correspond à une hauteur de 1 à 5 m au-dessus du niveau du lit dense dans la zone de régénération ;
c/ on refroidit le catalyseur dans une partie au moins de ladite zone en lit dense dans des conditions d'échange thermique indirect et de fluidisation adéquates, en présence d'un gaz de fluidisation contenant de l'oxygène, le catalyseur circulant vers le bas à contre-courant du sens d'écoulement du gaz de fluidisation,
d/ on procède à la séparation du catalyseur et du gaz de fluidisation ainsi que des éventuelles fumées de régénération dans ledit volume de la zone de désengagement,
e/ on évacue lesdits gaz et fumées de l'étape d) de la zone de désengagement et on les envoie dans la phase diluée au-dessus du lit dense de la zone de régénération ; et
f/ on recycle le catalyseur refroidi de la partie inférieure de la zone d'échange thermique dans le lit dense du régénérateur grâce à des moyens de recyclage du catalyseur refroidi dans lesquels on injecte à co-courant du gaz de fluidisation contenant de l'oxygène.

L'invention présente l'avantage d'une grande souplesse d'utilisation. En reliant la ligne de dégazage à la zone de désengagement des fumées et des gaz de fluidisation de catalyseur dans la partie supérieure de l'échangeur disposant d'un volume suffisant bien au-dessus d'un niveau du lit dense, on favorise l'écoulement du catalyseur autour du faisceau de tubes de l'échangeur. De plus, la totalité du débit de catalyseur qui peut être augmenté pour satisfaire les conditions d'équilibre thermique dans l'unité en fonction de la sévérité de la charge traverse l'échangeur et contribue à l'amélioration de l'échange thermique et de cette façon à son contrôle.

Selon une caractéristique de l'invention, la vitesse de fluidisation dans l'échangeur est en général de 0,025 m/s à 0,75 m/s et avantageusement de 0,05 à 0,30 m/s. Selon une autre caractéristique, la vitesse de fluidisation dans le régénérateur est en général de 0,6 à 1,5 m/s et avantageusement de 0,8 à 1,2 m/s.

Pour permettre un désengagement satisfaisant du gaz de fluidisation et des fumées de régénération du catalyseur, on choisit un échangeur dont la hauteur est telle que le volume disponible pour le désengagement du gaz de fluidisation correspond à une hauteur de 0,1 à 5 m et de préférence de 1 à 2,5 m au-dessus du niveau du lit dense dans la zone de régénération.

Les gaz et les fumées peuvent être évacuées de la zone de désengagement à une vitesse de 2 à 15 m/s et avantageusement de 5 à 8 m/s.

Le diamètre de la tubulure d'évacuation est habituellement tel que la perte de charge est limitée, par exemple de 0,1 bar. Cela correspond à un rapport de diamètre des tubulures d'admission du catalyseur et d'évacuation des gaz, habituellement inférieur ou égal à 10, par exemple compris entre 3 et 6.

Selon un mode de réalisation avantageux, sensiblement tout l'échange thermique indirect peut être effectué au-dessous du point de jonction de la conduite inclinée d'arrivée du catalyseur chaud dans l'échangeur thermique. Dans ces conditions, l'échange thermique est maximisé puisque la surface totale de l'échangeur est en contact avec tout le catalyseur y circulant.

Le contrôle du débit de catalyseur traversant l'échangeur et de ce fait le contrôle thermique de la régulation est habituellement assuré par une vanne à la sortie de l'échangeur et en amont de la remontée accélérée du catalyseur refroidi dans le lit dense. Cette vanne est en général asservie par des moyens de commande appropriés qui sont en liaison avec une sonde de température disposée soit dans le lit dense soit dans le lit fluidisé du régénérateur et qui comparent en général de manière continue le signal de température avec un signal de référence, préalablement défini en fonction des paramètres de la régénération et du type de charge.

L'invention concerne aussi un dispositif de régénération en lit fluidisé d'un catalyseur contaminé par du coke comprenant des moyens d'entrée (2) du catalyseur et des moyens de sortie (28) du catalyseur régénéré vers un réacteur. Il comporte en combinaison :
a/ une enceinte de régénération (1) de forme allongée reliée aux dits moyens (2) d'entrée et contenant un lit dense (3) de catalyseur et des moyens d'injection (4,5) d'un gaz de régénération dans le dit lit dense,
b/ un échangeur de chaleur (7) vertical externe de forme allongée, de hauteur appropriée et adapté à recevoir le catalyseur chaud et une partie des fumées par une conduite inclinée (6) reliant ledit lit dense de l'enceinte de régénération à l'échangeur et à le refroidir alors qu'il circule à travers l'échangeur dans une direction descen-dante, le dit échangeur comprenant des moyens (8) de fluidisation du catalyseur par un gaz à son extrêmité inférieure adaptée à y réaliser un lit dense à un niveau approprié, ladite conduite (6) inclinée débouchant dans l'échangeur (7) en un point de jonction situé sous le niveau (12) du lit dense de l'enceinte de régénération (1) à une distance de l'extrêmité supérieure de l'échangeur comprise entre le quart et la moitié de sa hauteur totale, telle qu'elle permet la séparation des éventuelles fumées de régénération et du gaz de fluidisation, du catalyseur dans la partie supérieure de l'échangeur ou zone de désengagement située au-dessus du niveau du lit dense dans l'échangeur, la hauteur de l'échangeur thermique étant telle que le volume disponible pour le désengagement des gaz correspond à une hauteur de 1 à 5 m au dessus du niveau du lit dense de l'enceinte de régénération,
c/ des moyens (17) d'évacuation des fumées et du gaz de fluidisation de la zone de désengagement à la partie supérieure de l'échangeur, reliés à l'enceinte de régénération (1) en un point au-dessus du niveau (12) du lit dense du catalyseur,
d/ des moyens de recyclage (20, 25) adaptés à une circulation globalement ascendante du catalyseur refroidi de l'extrêmité inférieure de l'échangeur dans ledit lit dense de l'enceinte de régénération et comprenant des moyens (22) de remontée du catalyseur refroidi par un gaz de fluidisation contenant de l'oxygène.

Le point de jonction au niveau de l'échangeur thermique de la conduite inclinée est situé à une distance de l'extrêmité supérieure de l'échangeur comprise de préférence entre le quart et le tiers de sa hauteur.

Les échangeurs thermiques peuvent être d'un type connu en soi, et sont généralement constitués de faisceaux de tubes échangeant de manière indirecte de la chaleur avec le catalyseur (tubes serpentins, tubes en U, en épingle ou tubes baïonnette). Celui-ci peut y circuler soit à l'intérieur, soit à l'extérieur. La paroi de l'échangeur thermique peut comprendre éventuellement une surface de tubes-membrane.

Le catalyseur régénéré selon l'invention est également de type conventionnel, tel que les silices-alumines de type zéolithique ayant avantageusement une granulométrie de 30 à 100 micromètres.

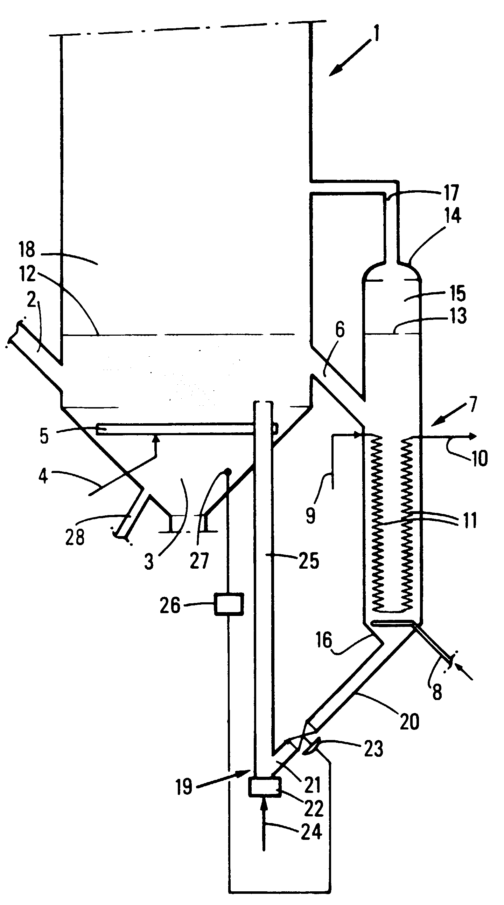

L'invention sera mieux comprise au vu de la figure illustrant le procédé et le dispositif.

Un régénérateur 1 provenant d'une unité de craquage catalytique reçoit par une ligne 2 en provenance d'un séparateur strippeur non représenté du catalyseur zéolithique sur lequel s'est disposé du coke pendant la réaction de craquage catalytique. Cette ligne débouche dans le lit catalytique 3 en un endroit approprié. Un gaz de régénération contenant de l'oxygène est amené par une ligne 4 dans un organe de fluidisation 5 tel qu'une grille ou un anneau et permet la fluidisation en lit dense du catalyseur et la combustion du coke de manière continue. Les fumées de régénération et le catalyseur entrainé sont séparés dans des cyclones non représentés sur la figure et les fumées de régénération sont évacués en majeure partie.

Une partie du catalyseur chaud et une partie des fumées à une température de 600 à 850°C sont prélevés dans le lit dense 3 en un point situé au-dessus de l'organe d'injection d'air 5 et amenées par gravité, grâce à une conduite (6) inclinée vers le bas, par exemple de 30 à 60 degrés d'angle à compter de l'axe de l'échangeur, dans un échangeur de chaleur 7 adapté à échanger par échange indirect de la chaleur. Cet échangeur est vertical, de forme allongée, cylindrique et contient un faisceau d'échange constitué de tubes 11 en serpentin dans lequel circule un fluide approprié tel que de l'eau sous pression amenée par une ligne 9. On récupère par une ligne 10 de la vapeur d'eau de cet échange thermique. Le faisceau de tubes est avantageusement situé sous la conduite inclinée de sorte que tout le catalyseur prélevé circule à travers le faisceau, de haut en bas. A l'extrêmité inférieure de l'échangeur un moyen de fluidisation 8 (anneau ou grille) introduit de l'air, à contre-courant du sens de l'écoulement du catalyseur et maintient le catalyseur en lit dense à travers le faisceau de tubes.

La conduite 6 d'amenée du catalyseur chaud inclinée selon un angle de 30 à 60° à compter de l'axe de l'échangeur débouche dans cet échangeur en un point de jonction situé sous le niveau 12 du lit dense du régénérateur par exemple en un point situé à une distance de l'extrêmité supérieure 14 de l'échangeur comprise entre le quart et le tiers de sa hauteur, de sorte que, dans la partie supérieure de l'échangeur, le catalyseur en lit dense atteint un niveau 13 approprié qui est fonction des vitesses de fluidisation respectives dans le régénérateur et l'échangeur thermique et donc des masses volumiques respectives. Il peut s'établir ainsi une faible différence de niveau du catalyseur dans le régénérateur et l'échangeur.

La hauteur de l'échangeur est choisie de telle façon que par rapport à ce niveau dans le régénérateur, une zone libre dite zone de désengagement 15 de 1 à 2,5 m dans l'échangeur soit aménagée pour permettre la séparation des éventuelles fumées de régénération du catalyseur et du gaz de fluidisation. Une ligne de dégazage 17 évacue les fumées et les gaz de la phase diluée de l'extrémité supérieure de l'échangeur vers la phase fluidisée diluée 18 au-dessus du lit fluidisé dense du régénérateur. Son diamètre est choisi de telle façon que le rapport du diamètre de la ligne de dégazage sur celui de la conduite 6 d'admission du catalyseur soit compris entre 3 et 6. La vitesse de sortie des gaz est en général de 2 à 15 m/s.

Des moyens de recyclage 19 comprennent une conduite 20 d'évacuation du catalyseur, reliée à une jonction 21 en Y ou en J. Cette conduite 20, en sortie de l'échangeur comporte une vanne de régulation 23 du débit de catalyseur chaud prélevé par la conduite 6 et qui circule dans l'échangeur. Un organe 22 de remontée (gaz lift) du catalyseur refroidi connecté à la jonction en Y accélère le catalyseur dans une conduite 25 verticale grâce à de l'air de fluidisation introduit par une ligne 24. La vitesse d'écoulement du catalyseur passe, par exemple, de 1 à 2 m/s dans la ligne 20, à 8 à 12 m/s dans la conduite 25. Cette conduite 25 ramène le catalyseur dans le lit dense 3 en un point situé au-dessus de l'organe d'injection d'air de fluidisation et contribue également, à la régénération du catalyseur qui est réalisée pour partie par l'air amené par l'organe d'injection d'air de fluidisation et pour une autre partie par l'air de fluidisation remontant le catalyseur refroidi dans le lit dense.
Le catalyseur régénéré et refroidi de 50 à 150°C est enfin recyclé du régénérateur vers une unité de craquage catalytique par une ligne de recyclage 28.

Le contrôle thermique de la régénération est effectué par la combinaison des organes suivants :

Des moyens d'asservissement 26 sont reliés à la vanne 23 disposée sur la conduite 20 d'évacuation du catalyseur. Ces moyens sont d'autre part connectés à une sonde 27 de température localisée dans le lit dense du régénérateur. Lorsque le signal envoyé par la sonde atteint une valeur supérieure à une valeur de consigne préalablement choisie en fonction des paramètres de la régénération, qui a été stockée par les moyens d'asservissement, ceux-ci envoient un signal à la vanne 23 qui augmente le débit d'évacuation du catalyseur et de ce fait augmente le débit d'admission du catalyseur dans l'échangeur. Cette augmentation du débit contribue à une diminution de la température de régénération.

Par contre, lorsque le signal envoyé par la sonde atteint une valeur inférieure à la valeur de consigne, la vanne 23 est fermée partiellement de façon à diminuer l'échange thermique, ce qui contribue à rehausser la température du catalyseur dans le régénérateur. A titre illustratif, on présente l'exemple suivant :

| | |
|---|---|
| Débit du catalyseur dans l'échangeur : | 310 000 kg/h |
| Température du lit dense du régénérateur : | 740°C |
| Température de sortie de l'échangeur : | 525°C |
| Quantité d'air de fluidisation dans l'échangeur : | 1 400 kg/h |
| Hauteur du faisceau d'échange (serpentins) : | 5,8 m |
| Hauteur de la zone de désengagement : | 2,5 m |
| Quantité de chaleur échangée : | 8,4 x 10⁷ kJ/h |
| Débit de vapeur générée : | 49 530 kg/h |
| Température de la vapeur : | 255°C |
| Pression de la vapeur : | 41,7 bar. |

## Revendications

1. Procédé de régénération en lit fluidisé d'un catalyseur contaminé par du coke déposé sur celui-ci caractérisé par les étapes suivantes :
a/ on procède à une régénération en lit dense dans au moins une zone de régénération contenant ledit lit dense, dans des conditions appropriées, du catalyseur contaminé et du catalyseur au moins en partie refroidi provenant de l'étape f) ci-dessous, en présence d'un gaz de régénération contenant de l'oxygène,
b/ on envoie par une conduite inclinée vers le bas une partie au moins du catalyseur contenu dans la zone de régénération ainsi qu'une partie des fumées dans une zone d'échange thermique externe et de hauteur appropriée, ladite conduite reliant le lit dense de la zone de régénération à la zone d'échange thermique et y débouchant en un point de jonction situé sous le niveau du lit dense de la zone de régénération à une distance de l'extrémité supérieure de la zone d'échange thermique comprise entre le quart et la moitié de sa hauteur totale et disposé de telle façon que l'on détermine de l'extrêmité inférieure de la zone d'échange thermique jusqu'au dessus dudit point de jonction une zone en lit dense de catalyseur s'établissant sensiblement jusqu'au niveau de catalyseur dans la zone de régénération et une zone de désengagement ayant un volume approprié au-dessus dudit lit dense jusqu'à l'extrêmité supérieure de la zone d'échange, la hauteur de la zone d'échange thermique étant telle que le volume disponible pour le désengagement des gaz correspond à une hauteur de 1 à 5 m au dessus du niveau du lit dense dans la zone de régénération,
c/ on refroidit le catalyseur dans une partie au moins de ladite zone en lit dense dans des conditions d'échange thermique indirect et de fluidisation adéquates, en présence d'un gaz de fluidisation contenant de l'oxygène, le catalyseur circulant vers le bas à contre-courant du sens d'écoulement du gaz de fluidisation,
d/ on procède à la séparation du catalyseur et du gaz de fluidisation ainsi que des éventuelles fumées de régénération dans ledit volume de la zone de désengagement,
e/ on évacue les dits gaz et fumées de l'étape d) de la zone de désengagement et on les envoie dans la phase diluée au-dessus du lit dense de la zone de régénération ; et
f/ on recycle le catalyseur refroidi de la partie inférieure de la zone d'échange thermique dans ledit lit dense du régénérateur grâce à des moyens de recyclage du catalyseur refroidi dans lesquels on injecte à co-courant du gaz de fluidisation contenant de l'oxygène.

2. Procédé selon la revendication 1 dans lequel le gaz de régénération est apporté en partie par au moins un moyen d'injection d'un gaz de régénération approprié et distinct de l'injection de gaz de fluidisation permettant le recyclage du catalyseur refroidi.

3. Procédé selon l'une des revendications 1 à 2 dans lequel on fait déboucher l'injection du gaz de fluidisation permettant le recyclage du catalyseur refroidi au-dessus du moyen d'injection du gaz de régénération.

4. Procédé selon l'une des revendications 1 à 3 dans lequel la vitesse de fluidisation dans la zone d'échange thermique est de 0,025 m/s à 0,75 m/s et avantageusement de 0,05 à 0,30 m/s.

5. Procédé selon l'une des revendications 1 à 4 dans lequel la vitesse de fluidisation dans la zone de régénération est de 0,6 à 1,5 m/s et avantageusement de 0,8 à 1,2 m/s.

6. Procédé selon l'une des revendications 1 à 5 dans lequel la hauteur de la zone d'échange thermique est telle que le volume disponible pour le désengagement des gaz correspond à une hauteur de 1 à 2,5 m au-dessus du niveau du lit dense dans la zone de régénération.

7. Procédé selon l'une des revendications 1 à 6 dans lequel le gaz est évacué de la zone de désengagement à une vitesse de 2 à 15 m/s et avantageusement de 5 à 8 m/s.

8. Procédé selon l'une des revendications 1 à 7, dans lequel sensiblement tout l'échange thermique indirect est effectué au-dessous du point de jonction.

9. Procédé selon l'une des revendications 1 à 8, dans lequel on contrôle le débit de catalyseur par au moins une vanne en aval de la zone d'échange thermique.

10. Dispositif de régénération en lit fluidisé d'un catalyseur contaminé par du coke comprenant des moyens d'entrée (2) du dit catalyseur et des moyens de sortie (28) de catalyseur régénéré vers un réacteur, caractérisé en ce qu'il comporte en combinaison :
a/ une enceinte de régénération (1) de forme allongée reliée aux dits moyens (2) d'entrée et contenant un lit dense (3) de catalyseur et des moyens d'injection (4,5) d'un gaz de régénération dans le dit lit dense,
b/ un échangeur de chaleur (7) vertical externe de forme allongée, de hauteur appropriée et adapté à recevoir le catalyseur chaud et une partie des fumées par une conduite inclinée (6) reliant ledit lit dense de l'enceinte de régénération à l'échangeur et à le refroidir alors qu'il circule à travers l'échangeur dans une direction descendante, le dit échangeur comprenant des moyens (8) de fluidisation du catalyseur par un gaz à son extrémité inférieure adaptée à y réaliser un lit dense à un niveau approprié, ladite conduite (6) inclinée débouchant dans l'échangeur (7) en un point de jonction situé sous le niveau (12) du lit dense de l'enceinte de régénération (1) à une distance de l'extrémité supérieure de l'échangeur comprise entre le quart et la moitié de sa hauteur totale, telle qu'elle permet la séparation des éventuelles fumées de régénération et du gaz de fluidisation, du catalyseur dans la partie supérieure de l'échangeur ou zone de désengagement située au-dessus du niveau du lit dense dans l'échangeur, la hauteur de l'échangeur thermique étant telle que le volume disponible pour le désengagement des gaz correspond à une hauteur de 1 à 5 m au dessus du niveau du lit dense de l'enceinte de régénération.
c/ des moyens (17) d'évacuation des fumées et du gaz de fluidisation de la zone de désengagement à la partie supérieure de l'échangeur, reliés à l'enceinte de régénération (1) en un point au-dessus du niveau (12) du lit dense du catalyseur,
d/ des moyens de recyclage (20, 25) adaptés à une circulation globalement ascendante du catalyseur refroidi de l'extrémité inférieure de l'échangeur dans ledit lit dense de l'enceinte de régénération et comprenant des moyens (22) de remontée du catalyseur refroidi par un gaz de fluidisation contenant de l'oxygène.

11. Dispositif selon la revendication 10 dans lequel le point de jonction est situé à une distance de l'extrémité supérieure de l'échangeur comprise entre le quart et le tiers de la hauteur totale de l'échangeur.

12. Dispositif selon l'une des revendications 10 à 11 dans lequel l'échangeur (7) comprend un faisceau (11) d'échange thermique dans la partie de l'échangeur située en dessous du point de jonction.

13. Dispositif selon l'une des revendications 10 à 12 dans lequel les moyens de recyclage comprennent une vanne de régulation (23) du débit de catalyseur située au-dessous de l'extrêmité inférieure de l'échangeur.

14. Dispositif selon l'une des revendications 10 à 13 dans lequel les moyens d'injection d'un gaz de régénération comprennent une grille (5) et dans lequel les moyens de recyclage (25) débouchent dans le lit dense (3) de l'enceinte de régénération au-dessus de ladite grille (5).

15. Dispositif selon l'une des revendications 10 à 14 dans lequel les moyens de recyclage comprennent une jonction en Y ou en J au-dessous de l'extrémité inférieure de l'échangeur, contenant les dits moyens de remontée du catalyseur.

## Patentansprüche

1. Verfahren zur Regenerierung eines Katalysators, der durch Koks kontaminiert ist, welches sich auf diesem niedergeschlagen hat, in einem Fließbett, das durch die folgenden Schritte gekennzeichnet ist:
a/ man nimmt eine Regenerierung des kontaminierten Katalysators und des wenigstens teilweise abgekühlten Katalysators, der aus dem Schritt f) unten stammt, in einem dichten Bett in wenigstens einer das dichte Bett enthaltenden Regenerierungszone unter geeigneten Bedingungen in Anwesenheit eines Gases zur Regenerierung, das Sauerstoff enthält, vor,
b/ man führt über eine nach unten geneigte Leitung wenigstens einen Teil des Katalysators, der in der Regenerierungszone enthalten ist, sowie einen Teil der Rauchgase in eine eine geeignete Höhe aufweisende Zone zum äußeren Wärmeaustausch ein, wobei die Leitung, die das dichte Bett der Regenerierungszone mit der Wärmeaustauschzone verbindet und dort an einer Verbindungsstelle einmündet, welche unterhalb des dichten Bettes der Regenerierungszone in einem Abstand von dem oberen Ende der Wärmeaustauschzone einschließlich zwischen dem Viertel und der Hälfte von deren Gesamthöhe gelegen ist und derart angeordnet ist, daß man von dem unteren Ende der Wärmeaustauschzone bis oberhalb der Verbindungsstelle eine Zone im dichten Katalysatorbett, die sich im wesentlichen bis zum Katalysator in der Regenerierungszone ausbildet, und eine Außereingriffszone, die ein geeignetes Volumen oberhalb des dichten Bettes bis zum oberen Ende der Austauschzone aufweist, bestimmt, wobei die Höhe der Wärmeaustauschzone derart ist, daß das Volumen, das für den Außereingriff der Gase verfügbar ist, einer Höhe von 1 bis 5 m oberhalb des dichten Bettes in der Regenerierungszone entspricht,
c/ man den Katalysator in wenigstens einem Teil der Zone im dichten Bett unter entsprechenden Bedingungen zum indirekten Wärmeaustausch und zur Fluidisierung in Anwesenheit eines Gases zur Fluidisierung, das Sauerstoff enthält, abkühlt, wobei der Katalysator im Gegenstrom der Strömungsrichtung des Gases zur Fluidisierung zirkuliert,
d/ man die Trennung des Katalysators und des Gases zur Fluidisierung sowie von eventuellen Rauchgasen zur Regenerierung in dem Volumen der Außereingriffszone vornimmt,
e/ man die Gase und Rauchgase des Schrittes d) aus der Außereingriffszone evakuiert und in die gelöste Phase oberhalb des dichten Bettes der Regenerierungsphase einführt, und
f/ man den abgekühlten Katalysator des unteren Teiles der Wärmeaustauschzone in das dichte Bett des Regenerators mittels Einrichtungen zur Zurückführung des abgekühlten Katalysators zurückführt, in welchen man im Gleichstrom Gas zur Fluidisierung, das Sauerstoff enthält, injiziert.

2. Verfahren nach Anspruch 1, bei welchem das Gas zur Regenerierung teilweise durch wenigstens eine Einrichtung zur Injektion eines Gases zur Regenerierung, die geeignet und von der Injektion von Gas zur Fluidisierung unterschiedlich ist, welche die Zurückführung des abgekühlten Katalysators gestattet, geliefert wird.

3. Verfahren nach einem der Ansprüche 1 bis 2, bei welchem man die Injektion des Gases zur Fluidisierung, welche die Rückführung des abgekühlten Katalysators gestattet, oberhalb der Einrichtung zur Injektion des Gases zur Regenerierung einmünden läßt.

4. Verfahren nach einem der Ansprüche 1 bis 3, bei welchem die Fluidisierungsgeschwindigkeit in der Wärmeaustauschzone von 0,025 m/s bis 0,75 m/s und vorteilhafterweise von 0,05 bis 0,30 m/s beträgt.

5. Verfahren nach einem der Ansprüche 1 bis 4, bei welchem die Fluidisierungsgeschwindigkeit in der Regenerierungszone von 0,6 bis 1,5 m/s und vorteilhafterweise von 0,8 bis 1,2 m/s beträgt.

6. Verfahren nach einem der Ansprüche 1 bis 5, bei welchem die Höhe der Wärmeaustauschzone derart ist, daß das für den Außereingriff des Gases verfügbare Volumen einer Höhe von 1 bis 2,5 m oberhalb des dichten Bettes in der Regenerierungszone entspricht.

7. Verfahren nach einem der Ansprüche 1 bis 6, bei welchem das Gas aus der Außereingriffszone mit einer Geschwindigkeit von 2 bis 15 m/s und vorteilhafterweise von 5 bis 8 m/s evakuiert wird.

8. Verfahren nach einem der Ansprüche 1 bis 7, bei welchem im wesentlichen der gesamte indirekte Wärmeaustausch unterhalb der Verbindungsstelle durchgeführt wird.

9. Verfahren nach einem der Ansprüche 1 bis 8, bei welchem man die Katalysatormenge durch wenigstens ein Ventil abströmseitig von der Wärmeaustauschzone steuert.

10. Vorrichtung zur Regenerierung eines Katalysators, der durch Koks kontaminiert ist, im Fließbett, die Einrichtungen (2) zum Einlaß des Katalysators und Einrichtungen (28) zum Auslaß des regenerierten Katalysators hin zu einem Reaktor umfaßt, dadurch gekennzeichnet, daß sie in Kombination umfaßt:
a/ einen Behälter (1) zur Regenerierung von länglicher Form, der mit den Einrichtungen (2) zum Einlaß verbunden ist und ein dichtes Katalysatorbett (3) sowie Einrichtungen (4, 5) zur Injektion eines Gases zur Regenerierung in das dichte Bett umfaßt,
b/ einen äußeren vertikalen Wärmetauscher (7) von länglicher Form, von geeigneter Höhe und geeignet, den warmen Katalysator und einen Teil von Rauchgasen über eine geneigte Leitung (6), die das dichte Bett des Behälters zur Regenerierung mit dem Austauscher verbindet, aufzunehmen und ihn abzukühlen, während er durch den Austauscher in absteigender Richtung zirkuliert, wobei der Austauscher Einrichtungen (8) zur Fluidisierung des Katalysators durch ein Gas an seinem unteren Ende, das dort angepaßt ist, ein dichtes Bett auf einer geeigneten Höhe zu realisieren, umfaßt, wobei die geneigte Leitung (6) in den Austauscher (7) an einer Verbindungsstelle einmündet, die unterhalb (12) des dichten Bettes des Behälters (1) zur Regenerierung in einem Abstand von dem oberen Ende des Austauschers einschließlich zwischen dem Viertel und der Hälfte seiner Gesamthöhe einmündet, derart, daß sie die Trennung von möglichen Rauchgasen zur Regenerierung und des Gases zur Fluidisierung, des Katalysators in dem oberen Bereich des Austauschers oder einer Außereingriffszone, die oberhalb des dichten Bettes in dem Austauscher gelegen ist, gestattet, wobei die Höhe des Wärmetauschers derart ist, daß das für den Außereingriff der Gase verfügbare Volumen einer Höhe von 1 bis 5 m oberhalb des dichten Bettes des Behälters zur Regenerierung entspricht,
c/ Einrichtungen (17) zur Evakuierung der Rauchgase und des Gases zur Fluidisierung aus der Außereingriffszone im oberen Bereich des Austauschers, die mit dem Behälter (1) zur Regenerierung an einer Stelle oberhalb (12) des dichten Bettes des Katalysators verbunden sind,
d/ Einrichtungen (20, 25) zur Zurückführung, die an eine im allgemeinen aufsteigende Zirkulation des abgekühlten Katalysators von dem unteren Ende des Austauschers in dem dichten Bett des Behälters zur Regenerierung angepaßt sind und Einrichtungen (22) zur Entnahme des abgekühlten Katalysators durch ein Gas zur Fluidisierung, das Sauerstoff enthält, umfassen.

11. Vorrichtung nach Anspruch 10, bei welcher die Verbindungsstelle in einem Abstand von dem oberen Ende des Austauschers einschließlich zwischen dem Viertel und dem Drittel der Gesamthöhe des Austauschers gelegen ist.

12. Vorrichtung nach einem der Ansprüche 10 bis 11, bei welcher der Austauscher (7) ein Bündel (11) zum Wärmeaustausch in dem Teil des Austauschers, der unterhalb der Verbindungsstelle gelegen ist, umfaßt.

13. Vorrichtung nach einem der Ansprüche 10 bis 12, bei welcher die Einrichtungen zur Zurückführung ein Ventil (23) zur Einstellung der Katalysatormenge, das unterhalb des unteren Endes des Austauschers gelegen ist, umfassen.

14. Vorrichtung nach einem der Ansprüche 10 bis 13, bei welcher die Einrichtungen zur Injektion eines Gases zur Regenerierung ein Rost (5) umfassen und bei welcher die Einrichtungen (25) zur Zurückführung in das dichte Bett (3) des Behälters zur Regenerierung oberhalb des Rostes (5) einmünden.

15. Vorrichtung nach einem der Ansprüche 10 bis 14, bei welchem die Einrichtungen zur Zurückführung eine Y- oder J-Verbindung unterhalb des unteren Endes des Austauschers, welche die Einrichtungen zur Entnahme des Katalysators beinhalten, umfassen.

## Claims

1. A method of fluidised bed generation of a catalyst contaminated by coke deposited on it, characterised by the following stages :
a/ in a least one generation zone containing said dense bed and under appropriate conditions, dense bed regeneration of the contaminated catalyst and of the at least partially cooled catalyst from stage f) below is carried out in the presence of a regenerating gas containing oxygen,
b/ at least a part of the catalyst contained in the regeneration zone and some of the smoke is passed through a downwardly inclined duct into an external heat exchanging zone of suitable height, the said duct connecting the dense bed of the regeneration zone to the heat exchange zone into which it discharges at a junction point which is situated under the level of the dense bed of the regeneration zone at a distance from the top end of the heat exchanging zone comprised between the one-quarter and one-half of its total height and so disposed that, from the bottom end up to the top of the said junction point, a dense bed of catalyst becomes established substantially as far as the level of catalyst in the regeneration zone and also a clearance zone offering suitable space above the said dense bed as far as the top end of the exchange zone, the height of the heat exchange zone being such that the volume available for gas clearance corresponds to height of 1 to 5 m above the level of the dense bed in the regeneration zone,
c/ the catalyst is cooled in at least a part of the said dense bed zone under adequate fluidisation and indirect heat exchange conditions, in the presence of fluidising gas containing oxygen, the catalyst circulating downwardly in counter-current to the direction of the flow of the fluidising gas,
d/ the procedure involves separation of the catalyst and fluidising gas as well as any regeneration fumes in the said space of the clearance zone,
e/ the said gases and fumes from stage d) are extracted from the clearance zone and are sent to the dilute phase above the dense bed of the regeneration zone and,
f/ the cooled catalyst is recycled from the bottom part of the heat exchange zone to the dense bed of the regenerator by recycling means of the cooled catalyst into which a co-current injection of fluidising gas containing oxygen is carried out.

2. A method according to claim 1 in which the regeneration gas is supplied partly by at least one means of injecting a suitable regeneration, gas, distinct from the injection of fluidising gas permitting recycling of the cooled catalyst.

3. A method according to one of claims 1 to 2 in which injection of the fluidising gas which permits recycling of the cooled catalyst is discharged above the regeneration gas injection means.

4. A method according to one of claims 1 to 3 in which the fluidisation rate in the heat exchange zone is 0.025 m/s to 0.75 m/s and is advantageously between 0.05 and 0.30 m/s.

5. A method according to one of claims 1 to 4 in which the rate of fluidisation in the regeneration zone is between 0.6 and 1.5 m/s and is advantageously between 0.8 and 1.2 m/s.

6. A method according to claims 1 to 5 in which the height of the heat exhange zone is such that the space available for gas clearance corresponds to a height of 1 to 2.5 m above the level of the dense bed in the regeneration zone.

7. A method according to one of claims 1 to 6 in which the gas is extracted from the clearance zone at a velocity of 2 to 15 m/s and advantageously of 5 to 8 m/s.

8. A method according to one of claims 1 to 7 in which substantially all the indirect heat exchange is carried out below the junction point.

9. A method according to one of claims 1 to 8 in which the rate of flow of catalyst is controlled by at least one valve downstream of the heat exchange zone.

10. An apparatus for fluidised bed regeneration of a catalyst contaminated by coke comprising means (2) for the inlet of the said catalyst and means (28) for the discharge of regenerated catalyst to a reactor, characterised in that it comprises, in combination:
a/ an elongate regeneration enclosure (1) connected to the said inlet means (2) and containing a dense bed (3) of catalyst and means (4, 5) of injecting a regenerating gas into the said dense bed,
b/ an external vertical heat exchanger (7) of elongate form, of a suitable height and adapted to receive the hot catalyst and part of the fumes through an inclined duct (6) connecting the said dense bed of the regenerating enclosure to the exchanger and adapted to cool it while it is circulating through the exchanger in a descending direction, the said exchanger comprising means (8) of fluidising the catalyst by a gas at its bottom end adapted to create therein a dense bed at an appropriate level, the said inclined duct (6) discharging into the exchanger (7) at a junction point situated below the level (12) of the dense bed in the regenerating enclosure (1) at a distance from the upper end of the exchanger comprised between the one-quater and one-half of its total height such that is permits separation of any regeneration fumes and fluidising gas from the catalyst in the upper part of the exchanger or clearance zone situated above the level of the dense bed in the exchanger, the height of the heat exchanger being such that the volume available for gas clearance corresponds to a height of 1 to 5 m above the level of the dense bed in the regeneration zone,
c/ means (17) of drawing off fumes and fluidising gas from the clearance zone in the upper part of the exchanger, connected to the regenerating enclosure (1) at a point above the level (12) of the dense bed of catalyst,
d/ recycling means (20, 25) adapted for generally ascending circulation of the cooled catalyst from the bottom end of the exchanger to the said dense bed of the regenerating enclosure and comprising means (22) for raising catalyst cooled by a fluidising gas containing oxygen.

11. An apparatus according to claim 10 in which the junction point is situated at a distance from the upper end of the exchanger which is comprised between one-quarter and one-half of the total height of the exchanger and preferably between one-quarter and one-third of the height.

12. An apparatus according to one of claims 10 to 11 in which the exchanger (7) comprises a nest (11) of heat exchanger tubes in the part of the exchanger which is situated below the junction point.

13. An apparatus according to one of claims 10 to 12 in which the recycling means comprise a valve (23) for regulating the rate of flow of catalyst and situated below the bottom end of the exchanger.

14. An apparatus according to one of claims 10 to 13 in which the means of injecting a regeneration gas comprise a grid (5) and in which the recycling means (25) discharge into the dense bed (3) of the regeneration enclosure, above the said grid (5).

15. An apparatus according to one of claims 10 to 14 in which the recycling means comprise a Y or J junction below the bottom end of the exchanger, containing the said catalyst lifting means.
